# EUROPEAN PATENT SPECIFICATION

(11) **EP 2 863 671 B1**
(45) Date of publication and mention of the grant of the patent: **07.09.2016**
(21) Application number: 12880709.6
(22) Date of filing: 02.07.2012
(51) Int. Cl.: H04J 14/02

(54) **SPECTRUM BANDWIDTH ALLOCATION METHOD AND DEVICE**
SPEKTRUMSBANDBREITENZUWEISUNGSVERFAHREN UND -VORRICHTUNG
PROCÉDÉ ET DISPOSITIF POUR L'ALLOCATION D'UNE LARGEUR DE BANDE SPECTRALE

(43) Date of publication of application: 22.04.2015
(73) Proprietor: Huawei Technologies Co., Ltd., Longgang District Shenzhen, Guangdong 518129 (CN)
(72) Inventor: LIU, Ning, Shenzhen Guangdong 518129 (CN); ZI, Xiaobing, Shenzhen Guangdong 518129 (CN)
(74) Representative: Maiwald Patentanwalts GmbH
(86) International application number: PCT/CN2012/078075
(87) International publication number: WO 2014/005269

(56) References cited:
- EP-A1- 2 403 169
- WO-A1-2007/074979
- WO-A1-2012/066385
- CN-A- 102 196 451
- CN-A- 102 447 623
- US-A1- 2008 070 586
- US-A1- 2011 026 925
- US-B1- 7 068 938

## Description

### TECHNICAL FIELD

The present invention relates to communications technologies, and in particular, to a spectrum bandwidth allocation method and device.

### BACKGROUND

With the occurrence of large-capacity services in a communications system, an increasingly higher requirement is also imposed on a transmission rate of an optical communications network. With the improvement of a signal rate in a communications system, a signal with a rate of over 400 Gb/s occupies a wider spectrum bandwidth. In multi-rate hybrid networking, to avoid signal crosstalk between adjacent channels, a maximum spectrum bandwidth required by a signal of each rate may be used as a fixed frequency interval (for example, 50 GHz/100 GHz). However, such spectrum bandwidth allocation method causes serious spectrum waste. To improve flexibility of service configuration in an optical communications network, an optical network evolves from a fixed bandwidth optical network to a variable bandwidth optical network, that is, changes from a fixed spectrum bandwidth to a flexible variable spectrum bandwidth.

In an optical communications network of a variable spectrum bandwidth, a spectrum unit slice (for example, 12.5 GHz) with a smaller width may be defined, and a channel for transmitting a service signal is allowed to occupy multiple spectrum units slice, so as to implement flexible configuration of a spectrum bandwidth. In the solution of the prior art, for a signal using a multi-carrier technology, because of high rectangularity of a spectrum, to decrease signal crosstalk between channels for transmitting two service signals, a relatively large spectrum bandwidth is reserved as a guard band, which obviously reduces a utilization rate of a spectrum bandwidth in an optical communications network.

US 2011/002695 shows the separation of bandwidth channels by guard band channels. The width of a guard band can be selected by using more wavelength channels for the guard band.

### SUMMARY

In view of this, embodiments of the present invention provide a spectrum bandwidth allocation method and apparatus, which can improve a utilization rate of a spectrum bandwidth in an optical communications network.

According to a first aspect, an implementation manner of the present invention provides a spectrum bandwidth allocation method, including:
acquiring a request message for adding a first service, and determining a path of the first service, where the request message carries information about a first spectrum bandwidth that needs to be occupied by a channel of the first service;
if a path of a second service in existing services is the same as the path of the first service, determining an idle spectrum bandwidth adjacent to a second spectrum bandwidth occupied by a channel of the second service as an allocated resource, where the idle spectrum bandwidth adjacent to the second spectrum bandwidth meets a requirement of a third spectrum bandwidth required for adding the first service, and the third spectrum bandwidth includes: the first spectrum bandwidth, and a fourth spectrum bandwidth that needs to be occupied by a guard band between channels of the first service and the second service that have the same path, where the fourth spectrum bandwidth is less than a spectrum bandwidth occupied by a guard band between channels of two services having different paths; and
allocating, from the idle spectrum bandwidth adjacent to the second spectrum bandwidth, the third spectrum bandwidth to the first service.

According to a second aspect, an implementation manner of the present invention provides a device, where the device includes: a message acquiring unit, a path determining unit, a first bandwidth selecting unit and a first bandwidth allocating unit, where
the message acquiring unit is configured to acquire a request message for adding a first service, and determine a path of the first service, where the request message carries information about a first spectrum bandwidth that needs to be occupied by a channel of the first service;
the path determining unit is configured to receive a determining result output by the message acquiring unit, and determine whether a path of each service in existing services is the same as the path of the first service;
the first bandwidth selecting unit is configured to receive a determining result that is output by the path determining unit and indicates that a path of a second service in the existing services is the same as the path of the first service, and determine an idle spectrum bandwidth adjacent to a second spectrum bandwidth occupied by a channel of the second service as an allocated resource, where the idle spectrum bandwidth adjacent to the second spectrum bandwidth meets a requirement of a third spectrum bandwidth required for adding the first service, and the third spectrum bandwidth includes: the first spectrum bandwidth, and a fourth spectrum bandwidth that needs to be occupied by a guard band between channels of the first service and the second service that have the same path, where the fourth spectrum bandwidth is less than a spectrum bandwidth occupied by a guard band between channels of two services having different paths; and
the first bandwidth allocating unit is configured to receive a determining result output by the first bandwidth selecting unit, and allocate, from the idle spectrum bandwidth adjacent to the second spectrum bandwidth, the third spectrum bandwidth to the first service.

In the technical solutions of the foregoing embodiments, for a new service to be added, whether a path of the new service is the same as a path of existing services needs to be determined, and if yes, a spectrum bandwidth occupied by a channel of a service having the same path is determined in the existing services, an idle spectrum bandwidth that is adjacent to the spectrum bandwidth and meets a requirement of adding the new service is selected, and then spectrum bandwidth is allocated to the new service in an adjacent part of the spectrum bandwidth. The allocated spectrum bandwidth includes a spectrum bandwidth that needs to be occupied by the channel of the new service, and a spectrum bandwidth that needs to be occupied by a guard band between channels of the new service and the existing service; and a guard band between channels of two services having a same path is narrower than a guard band between channels of two services having different paths. Therefore, in the technical solutions of the embodiments of the present invention, spectrum bandwidths occupied by channels of services having a same path are connected in series as much as possible by using a relatively small spectrum bandwidth that serves as a guard band, which obviously improves a utilization rate of a spectrum bandwidth in an optical communications network.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic flowchart of a spectrum bandwidth allocation method according to a method embodiment of the present invention;
FIG. 2 is a schematic diagram of spectrum bandwidth allocation according to another method embodiment of the present invention;
FIG. 3 is a schematic diagram of a network structure according to another method embodiment of the present invention; and
FIG 4 is a schematic structural diagram according to a device embodiment of the present invention.

### DESCRIPTION OF EMBODIMENTS

In the following description, to describe, rather than limit, specific details such as a particular device structure and a technology are provided to make a thorough understanding of the present invention. However, it should be understood by persons skilled in the art that the present invention can also be implemented in other embodiments without the specific details. In other cases, detailed descriptions of well known apparatuses, circuits and methods are omitted, so that the present invention is described without being disturbed by the unnecessary details.

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by persons of ordinary skill in the art based on the embodiments of the present invention without creative efforts shall fall within the protection scope of the present invention.

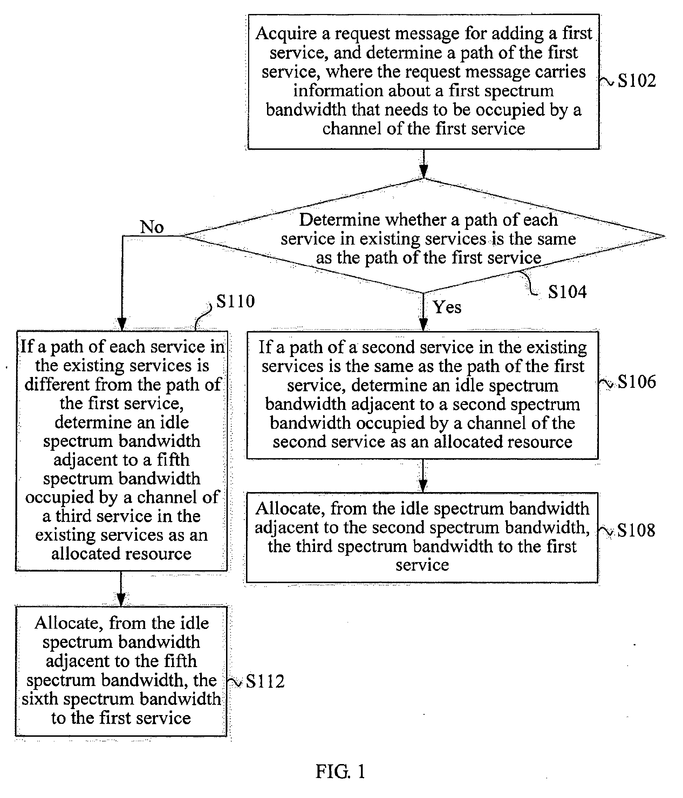

An embodiment of the present invention provides a spectrum bandwidth allocation method. As shown in FIG. 1, FIG. 1 is a schematic flowchart of a spectrum bandwidth allocation method according to a method embodiment of the present invention, and the method includes:
S102: Acquire a request message for adding a first service, and determine a path of the first service, where the request message carries information about a first spectrum bandwidth that needs to be occupied by a channel of the first service.

It should be noted that, for a transmitted new service that needs to be added to an optical communications network, optionally, an implementation case is: A request message obtained by a source node device carries information about a spectrum bandwidth occupied by a channel of the new service and information about a path of the new service, so that the source node device can rapidly determine the path of the new service according to the acquired request message. Alternatively, optionally, another implementation case is: A request message obtained by a PCE (Path Computation Element, path computation element) carries information about a spectrum bandwidth occupied by a channel of the new service, and information about a source node and a sink node of the new service, and then the PCE may compute, according to the request message and network topology information, a path of the new service by using a CSPF (Constrained Shortest Path First, constrained shortest path first) algorithm.

S104: Determine whether a path of each service in existing services is the same as the path of the first service.

It should be noted that, when an optical communications network transmits multiple services simultaneously, at least one existing service has a same path as a new service to be added.

S106: If a path of a second service in the existing services is the same as the path of the first service, determine an idle spectrum bandwidth adjacent to a second spectrum bandwidth occupied by a channel of the second service as an allocated resource, where the idle spectrum bandwidth adjacent to the second spectrum bandwidth meets a requirement of a third spectrum bandwidth required for adding the first service, and the third spectrum bandwidth includes: the first spectrum bandwidth, and a fourth spectrum bandwidth that needs to be occupied by a guard band between channels of the first service and the second service that have the same path, where the fourth spectrum bandwidth is less than a spectrum bandwidth occupied by a guard band between channels of two services having different paths.

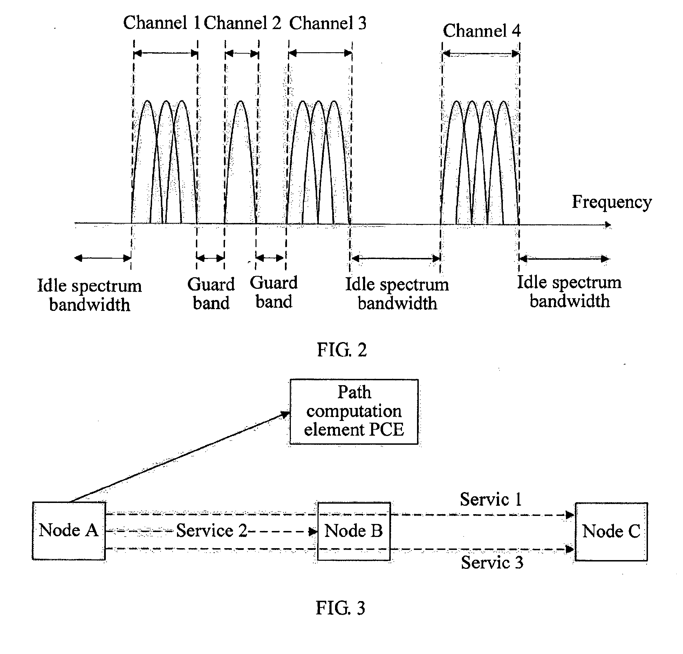

It should be noted that, to facilitate understanding of a spectrum bandwidth occupied by a channel of a service, a spectrum bandwidth occupied by a guard band between channels of two services, and an idle spectrum bandwidth, refer to FIG. 2. FIG. 2 is a schematic diagram of spectrum bandwidth allocation according to another method embodiment of the present invention. 4 services are transmitted on a fiber link, and the figure shows a case in which spectrum bandwidths occupied by channels for transmitting the 4 services, that is, spectrum bandwidths occupied by a channel 1, a channel 2, a channel 3, and a channel 4. A guard band needs to be reserved between channels of two services, that is, a spectrum bandwidth between the channel 1 and the channel 2 is reserved as a guard band, and likewise, a spectrum bandwidth between the channel 2 and the channel 3 is reserved as a guard band. A spectrum bandwidth on the left side of the channel 1, a spectrum bandwidth between the channel 3 and the channel 4, and a spectrum bandwidth on the right side of the channel 4 all are idle spectrum bandwidths, where all the idle spectrum bandwidths may be used for resource allocation for a new service.

S108: Allocate, from the idle spectrum bandwidth adjacent to the second spectrum bandwidth, the third spectrum bandwidth to the first service.

It should be noted that, in the prior art, no matter whether paths of two services are the same or different, a relatively large spectrum bandwidth (for example, 3 slices in a normal case) between channels of two services is reserved as a guard band. However, in the embodiment of the present invention, for a new service to be added, whether a path of the new service is the same as a path of existing services needs to be determined, and if yes, a spectrum bandwidth occupied by a channel of a service having the same path is determined in the existing services, an idle spectrum bandwidth that is adjacent to the spectrum bandwidth and meets a requirement of adding the new service is selected, and then spectrum bandwidth is allocated to the new service in an adjacent part of the spectrum bandwidth. The allocated spectrum bandwidth includes a spectrum bandwidth that needs to be occupied by the channel of the new service, and a spectrum bandwidth that needs to be occupied by a guard band between channels of the new service and the existing service; and the spectrum bandwidth that needs to be occupied by the guard band in this embodiment is (for example, 2 slices or 1 slice) less than a spectrum bandwidth that needs to be occupied by a guard band in the prior art. That is, in this embodiment, a guard band between channels of two services having a same path is narrower than a guard band between channels of two services having different paths. Therefore, in the technical solution of the embodiment of the present invention, spectrum bandwidths occupied by channels of services having a same path are connected in series as much as possible by using a relatively small spectrum bandwidth that serves as a guard band, which obviously improves a utilization rate of a spectrum bandwidth in an optical communications network, and can further effectively avoid a problem that signal crosstalk is easily generated between channels of services having different paths.

Based on the method of the foregoing embodiment, optionally, in another embodiment, after the third spectrum bandwidth is allocated to the first service, it is determined that the new service is transmitted by using a coherent receiver on a fiber link. The coherent receiver has a desirable frequency-selective capability, and therefore the coherent receiver may be used to acquire the new service, so that a smaller spectrum bandwidth (for example, 1 slice) can be allocated to the guard band between the channels of the new service and the existing service that have the same path. Therefore, in the technical solution of the embodiment, a utilization rate of a spectrum bandwidth in an optical communications network can be improved more obviously, and further a problem that signal crosstalk is easily generated between channels of services having different paths can be avoided more effectively.

Based on the method of the foregoing embodiment, optionally, in another embodiment, the method includes:
S110: If a path of each service in the existing services is different from the path of the first service, determine an idle spectrum bandwidth adjacent to a fifth spectrum bandwidth occupied by a channel of a third service in the existing services as an allocated resource, where the idle spectrum bandwidth adjacent to the fifth spectrum bandwidth meets a requirement of a sixth spectrum bandwidth required for adding the first service, and the sixth spectrum bandwidth includes: the first spectrum bandwidth, and a seventh spectrum bandwidth that needs to be occupied by a guard band between channels of the first service and the third service that have different paths, where the seventh spectrum bandwidth is greater than the fourth spectrum bandwidth.
S112: Allocate, from the idle spectrum bandwidth adjacent to the fifth spectrum bandwidth, the sixth spectrum bandwidth to the first service.

It should be noted that, because a new service (using the first service as an example) and an existing service (using the second service as an example) have a same path, and the new service and another existing service (using the third service as an example) do not have a same path, a guard band between two channels of the first service and the second service is relatively narrow, and a guard band between two channels of the first service and the third service is relatively wide.

Based on the method of the foregoing embodiment, optionally, in another embodiment, the method includes: if adjacent parts on two sides of the second spectrum bandwidth have an idle spectrum bandwidth that meets the requirement of the third spectrum bandwidth, where a first idle spectrum bandwidth is adjacent to a spectrum bandwidth occupied by a channel of a fourth service in the existing services, a second idle spectrum bandwidth is adjacent to a spectrum bandwidth occupied by a channel of a fifth service in the existing services, the spectrum bandwidth occupied by the channel of the fourth service is closest to the second spectrum bandwidth, and both a path of the fourth service and a path of the fifth service are the same as the path of the second service, selecting the first idle spectrum bandwidth as the allocated resource.

Optionally, based on the method of the foregoing embodiment, optionally, in another embodiment, the method includes: if adjacent parts on two sides of the second spectrum bandwidth have an idle spectrum bandwidth that meets the requirement of the third spectrum bandwidth, where a first idle spectrum bandwidth is adjacent to a spectrum bandwidth occupied by a channel of a fourth service in the existing services, a second idle spectrum bandwidth is adjacent to a spectrum bandwidth occupied by a channel of a fifth service in the existing services, a path of the fourth service is the same as the path of the second service, and a path of the fifth service is different from the path of the second service, selecting the first idle spectrum bandwidth as the allocated resource.

Optionally, based on the method of the foregoing embodiment, optionally, in another embodiment, the method includes: if adjacent parts on two sides of the second spectrum bandwidth have an idle spectrum bandwidth that meets the requirement of the third spectrum bandwidth, where a first idle spectrum bandwidth is adjacent to a spectrum bandwidth occupied by a channel of a fourth service in the existing services, a path of the fourth service is the same as the path of the second service, and a second idle spectrum bandwidth is not adjacent to a spectrum bandwidth occupied by a channel of another existing service except the second service, selecting the first idle spectrum bandwidth as the allocated resource.

Optionally, based on the method of the foregoing embodiment, optionally, in another embodiment, the method includes: if adjacent parts on two sides of the second spectrum bandwidth have an idle spectrum bandwidth that meets the requirement of the third spectrum bandwidth, where a first idle spectrum bandwidth is adjacent to a spectrum bandwidth occupied by a channel of a fourth service in the existing services, a path of the fourth service is different from the path of the second service, and a second idle spectrum bandwidth is not adjacent to a spectrum bandwidth occupied by a channel of another existing service except the second service, selecting the second idle spectrum bandwidth as the allocated resource.

Optionally, based on the method of the foregoing embodiment, optionally, in another embodiment, the method includes: if adjacent parts on two sides of the second spectrum bandwidth have an idle spectrum bandwidth that meets the requirement of the third spectrum bandwidth, where a first idle spectrum bandwidth is adjacent to a spectrum bandwidth occupied by a channel of a fourth service in the existing services, a second idle spectrum bandwidth is adjacent to a spectrum bandwidth occupied by a channel of a fifth service in the existing services, and both a path of the fourth service and a path of the fifth service are different from the path of the second service, randomly selecting the first idle spectrum bandwidth or the second idle spectrum bandwidth as the allocated resource.

Optionally, based on the method of the foregoing embodiment, optionally, in another embodiment, the method includes: if adjacent parts on two sides of the second spectrum bandwidth have two idle spectrum bandwidths that meet the requirement of the third spectrum bandwidth, where the two idle spectrum bandwidths are not adjacent to a spectrum bandwidth occupied by a channel of another existing service except the second service, randomly selecting the first idle spectrum bandwidth or the second idle spectrum bandwidth as the allocated resource.

It should be noted that, when an existing service (using the second service as an example) that has a same path as a new service (using the first service as an example) is determined, and it is further determined that adjacent parts on two sides of a spectrum bandwidth occupied by a channel of the existing service have an idle spectrum bandwidth that meets a requirement of a spectrum bandwidth required for adding the new service, an idle spectrum bandwidth in an adjacent part on one of the sides needs to be selected as an allocated resource of the new service. The embodiments of how to determine an allocated resource in six different cases are described above in detail, and to sum up, an idle spectrum bandwidth between channels of two services having a same path is preferentially selected, then an idle spectrum bandwidth that is not adjacent to a spectrum bandwidth of a channel of another service except an existing service (using the second service as an example) is selected, and if both of the foregoing two types of idle spectrum bandwidths do not exist, an idle spectrum bandwidth between channels of two services having different paths is selected. Therefore, in the technical solution of the embodiment of the present invention, spectrum bandwidths occupied by channels of services having a same path are connected in series as much as possible by using a relatively small spectrum bandwidth that serves as a guard band, which obviously improves a utilization rate of a spectrum bandwidth in an optical communications network, and can further effectively avoid a problem that signal crosstalk is easily generated between channels of services having different paths.

The spectrum bandwidth allocation method provided in the foregoing embodiment may be executed by a source node device, a PCE, or another device, which is merely a specific example herein, and does not impose any limitation to the embodiment of the present invention.

It should be noted that, in an optical communications network, a source node of a service may acquire information about an idle spectrum bandwidth on a fiber link between adjacent nodes by sending a signaling message hop by hop to nodes in a path of the service; or acquire information about an idle spectrum bandwidth on a fiber link in the optical communications network by receiving information that is about a spectrum bandwidth occupied by a channel of an existing service and is sent by a network management system. The foregoing information is pre-stored in a source node, a PCE or another device for executing the method of the foregoing embodiment. In addition, a device for executing the method of the foregoing embodiment also pre-stores information about a path of the existing service.

Persons of ordinary skill in the art may understand that all or a part of the steps of the method embodiments may be implemented by a program instructing relevant hardware. The foregoing program may be stored in a computer readable storage medium. When the program runs, the steps of the method embodiments are performed. The foregoing storage medium includes: any medium that can store program code, such as a ROM, a RAM, a magnetic disk, or an optical disc.

The technical solutions of the embodiments of the present invention are further described below by using an optical communications network with 3 nodes and an execution body being a PCE as an example. Referring to FIG. 3, FIG. 3 is a schematic diagram of a network structure according to another method embodiment of the present invention. As represented by the dashed line shown in FIG. 3, a service 1 and a service 2 are existing services, a service 3 is a new service that needs to be added, a path of the service 1 is A→B→C, a path of the service 2 is A→B, a source node of the service 3 is a node A, and a sink node of the service 3 is a node C. A total spectrum bandwidth of a fiber link is 30 slices, where a spectrum bandwidth occupied by a channel of the service 1 is slice 11 to slice 15, a spectrum bandwidth occupied by a channel of the service 2 is slice 23 to slice 30, and a spectrum bandwidth that needs to be occupied by a channel of the service 3 is 4 slices, where slice is a spectrum unit of a relatively small width defined in a variable bandwidth optical network, for example, 12.5 GHz.

S302: The node A sends, to the PCE, a request message of adding the new service 3, where the request message carries information about the source node A and the sink node C of the new service 3 and information about the spectrum bandwidth with 4 slices occupied by the channel of the new service 3.

S304: The PCE computes, according to the acquired request message and network topology information, that a path of the new service 3 is A→B→C.

S306: The PCE determines that the path of the existing service 1 is the same as the computed path of the new service 3, and further determines that adjacent parts on two sides of the spectrum bandwidth, slice 11 to slice 15, occupied by the channel of the existing service 1 have an idle spectrum bandwidth that meets a requirement of a spectrum bandwidth with 5 slices required for adding the new service 3, that is, slice 1 to slice 10 and slice 16 to slice 22.

S308: The PCE determines that the path of the existing service 2 is different from the computed path of the new service 3, and the idle spectrum bandwidth, slice 16 to slice 22, is adjacent to the spectrum bandwidth, slice 23 to slice 30, occupied by the channel of the existing service 2, selects, from the idle spectrum bandwidth, slice 1 to slice 10, a spectrum bandwidth with 5 slices to be allocated to the new service 3, that is, slice 10 is allocated as a guard band between the channels of the existing service 1 and the new service 3, and slice 6 to slice 9 are allocated as a channel for transmitting the new service 3.

Therefore, in the technical solution of the embodiment of the present invention, spectrum bandwidths occupied by channels of services having a same path are connected in series as much as possible by using a relatively small spectrum bandwidth that serves as a guard band, which obviously improves a utilization rate of a spectrum bandwidth in an optical communications network, and can further effectively avoid a problem that signal crosstalk is easily generated between channels of services having different paths.

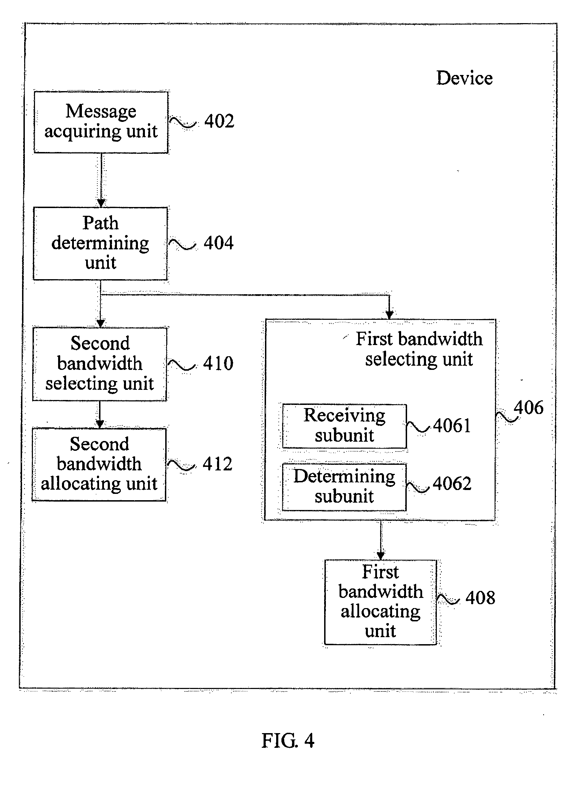

FIG. 4 is a schematic structural diagram according to a device embodiment of the present invention. The device is configured to allocate a spectrum bandwidth in an optical communications network, and the device may be a source node device, a PCE, or another device with a similar function. As shown in FIG. 4, the device includes: a message acquiring unit 402, a path determining unit 404, a first bandwidth selecting unit 406 and a first bandwidth allocating unit 408, and specific content is as follows:
The message acquiring unit 402 is configured to acquire a request message for adding a first service, and determine a path of the first service, where the request message carries information about a first spectrum bandwidth that needs to be occupied by a channel of the first service.

The path determining unit 404 is configured to receive a determining result output by the message acquiring unit 402, and determine whether a path of each service in existing services is the same as the path of the first service.

The first bandwidth selecting unit 406 is configured to receive a determining result that is output by the path determining unit 404 and indicates that a path of a second service in the existing services is the same as the path of the first service, and determine an idle spectrum bandwidth adjacent to a second spectrum bandwidth occupied by a channel of the second service as an allocated resource, where the idle spectrum bandwidth adjacent to the second spectrum bandwidth meets a requirement of a third spectrum bandwidth required for adding the first service, and the third spectrum bandwidth includes: the first spectrum bandwidth, and a fourth spectrum bandwidth that needs to be occupied by a guard band between channels of the first service and the second service that have the same path, where the fourth spectrum bandwidth is less than a spectrum bandwidth occupied by a guard band between channels of two services having different paths.

The first bandwidth allocating unit 408 is configured to receive a determining result output by the first bandwidth selecting unit 406, and allocate, from the idle spectrum bandwidth adjacent to the second spectrum bandwidth, the third spectrum bandwidth to the first service.

It should be noted that, in the prior art, no matter whether paths of two services are the same or different, a relatively large spectrum bandwidth (for example, 3 slices in a normal case) between channels of two services is reserved as a guard band. However, in the technical solution of the foregoing embodiment, for a new service to be added, whether a path of the new service is the same as a path of existing services needs to be determined, and if yes, a spectrum bandwidth occupied by a channel of a service having the same path is determined in the existing services, an idle spectrum bandwidth that is adjacent to the spectrum bandwidth and meets a requirement of adding the new service is selected, and then spectrum bandwidth is allocated to the new service in an adjacent part of the spectrum bandwidth. The allocated spectrum bandwidth includes a spectrum bandwidth that needs to be occupied by the channel of the new service, and a spectrum bandwidth that needs to be occupied by a guard band between channels of the new service and the existing service; and the spectrum bandwidth that needs to be occupied by the guard band in this embodiment is (for example, 2 slices or 1 slice) less than a spectrum bandwidth that needs to be occupied by a guard band in the prior art. That is, in this embodiment, a guard band between channels of two services having a same path is narrower than a guard band between channels of two services having different paths. Therefore, in the technical solution of the embodiment of the present invention, spectrum bandwidths occupied by channels of services having a same path are connected in series as much as possible by using a relatively small spectrum bandwidth that serves as a guard band, which obviously improves a utilization rate of a spectrum bandwidth in an optical communications network, and can further effectively avoid a problem that signal crosstalk is easily generated between channels of services having different paths.

Based on the device of the foregoing embodiment, optionally, in another embodiment, the device further includes a second bandwidth selecting unit 410 and a second bandwidth allocating unit 412, and specific content is as follows:
The second bandwidth selecting unit 410, configured to receive a determining result that is output by the path determining unit 404 and indicates that the path of each service in the existing services is different from the path of the first service, and determine an idle spectrum bandwidth adjacent to a fifth spectrum bandwidth occupied by a channel of a third service in the existing services as an allocated resource, where the idle spectrum bandwidth adjacent to the fifth spectrum bandwidth meets a requirement of a sixth spectrum bandwidth required for adding the first service, and the sixth spectrum bandwidth includes: the first spectrum bandwidth, and a seventh spectrum bandwidth that needs to be occupied by a guard band between channels of the first service and the third service that have different paths, where the seventh spectrum bandwidth is greater than the fourth spectrum bandwidth.

The second bandwidth allocating unit 412 is configured to allocate, from the idle spectrum bandwidth adjacent to the fifth spectrum bandwidth, the sixth spectrum bandwidth to the first service.

It should be noted that, because a new service (using the first service as an example) and an existing service (using the second service as an example) have a same path, and the new service and another existing service (using the third service as an example) do not have a same path, a guard band between two channels of the first service and the second service is relatively narrow, and a guard band between two channels of the first service and the third service is relatively wide.

Based on the device of the foregoing embodiment, optionally, in another embodiment, the first bandwidth selecting unit 406 in the device may include the following multiple subunits:
a receiving subunit 4061, configured to receive a determining result that is output by the path determining unit 404 and indicates that the path of the second service in the existing services is the same as the path of the first service; and
a determining subunit 4062, configured to determine the idle spectrum bandwidth adjacent to the second spectrum bandwidth occupied by the channel of the second service as an allocated resource.

It should be noted that, when an existing service (using the second service as an example) that has a same path as a new service (using the first service as an example) is determined, and it is further determined that adjacent parts on two sides of a spectrum bandwidth occupied by a channel of the existing service have an idle spectrum bandwidth that meets a requirement of a spectrum bandwidth required for adding the new service, an idle spectrum bandwidth in an adjacent part on one of the sides needs to be selected as an allocated resource of the new service. Therefore, the determining subunit 4062 of the first bandwidth selecting unit 406 may further include the following one or more subunits, where a function of each subunit (not shown in the figure) is corresponding to an implementation manner for determining resource allocation, and specific content is as follows:
Based on the device of the foregoing embodiment, optionally, in another embodiment, the determining subunit 4062 includes:
   a first subunit, configured to determine that adjacent parts on two sides of the second spectrum bandwidth have an idle spectrum bandwidth that meets the requirement of the third spectrum bandwidth, where a first idle spectrum bandwidth is adjacent to a spectrum bandwidth occupied by a channel of a fourth service in the existing services, a second idle spectrum bandwidth is adjacent to a spectrum bandwidth occupied by a channel of a fifth service in the existing services, the spectrum bandwidth occupied by the channel of the fourth service is closest to the second spectrum bandwidth, and both a path of the fourth service and a path of the fifth service are the same as the path of the second service, and select the first idle spectrum bandwidth as the allocated resource.

Optionally, based on the device of the foregoing embodiment, optionally, in another embodiment, the determining subunit 4062 includes:
a second subunit, configured to determine that adjacent parts on two sides of the second spectrum bandwidth have an idle spectrum bandwidth that meets the requirement of the third spectrum bandwidth, where a first idle spectrum bandwidth is adjacent to a spectrum bandwidth occupied by a channel of a fourth service in the existing services, a second idle spectrum bandwidth is adjacent to a spectrum bandwidth occupied by a channel of a fifth service in the existing services, a path of the fourth service is the same as the path of the second service, and a path of the fifth service is different from the path of the second service, and select the first idle spectrum bandwidth as the allocated resource.

Optionally, based on the device of the foregoing embodiment, optionally, in another embodiment, the determining subunit 4062 includes:
a third subunit, configured to determine that adjacent parts on two sides of the second spectrum bandwidth have an idle spectrum bandwidth that meets the requirement of the third spectrum bandwidth, where a first idle spectrum bandwidth is adjacent to a spectrum bandwidth occupied by a channel of a fourth service in the existing services, a path of the fourth service is the same as the path of the second service, and a second idle spectrum bandwidth is not adjacent to a spectrum bandwidth occupied by a channel of another existing service except the second service, and select the first idle spectrum bandwidth as the allocated resource.

Optionally, based on the device of the foregoing embodiment, optionally, in another embodiment, the determining subunit 4062 includes:
a fourth subunit, configured to determine that adjacent parts on two sides of the second spectrum bandwidth have an idle spectrum bandwidth that meets the requirement of the third spectrum bandwidth, where a first idle spectrum bandwidth is adjacent to a spectrum bandwidth occupied by a channel of a fourth service in the existing services, a path of the fourth service is different from the path of the second service, and a second idle spectrum bandwidth is not adjacent to a spectrum bandwidth occupied by a channel of another existing service except the second service, and select the second idle spectrum bandwidth as the allocated resource.

Optionally, based on the device of the foregoing embodiment, optionally, in another embodiment, the determining subunit 4062 includes:
a fifth subunit, configured to determine that adjacent parts on two sides of the second spectrum bandwidth have an idle spectrum bandwidth that meets the requirement of the third spectrum bandwidth, where a first idle spectrum bandwidth is adjacent to a spectrum bandwidth occupied by a channel of a fourth service in the existing services, a second idle spectrum bandwidth is adjacent to a spectrum bandwidth occupied by a channel of a fifth service in the existing services, and both a path of the fourth service and a path of the fifth service are different from the path of the second service, and randomly select the first idle spectrum bandwidth or the second idle spectrum bandwidth as the allocated resource.

Optionally, based on the device of the foregoing embodiment, optionally, in another embodiment, the determining subunit 4062 includes:
a sixth subunit, configured to: if adjacent parts on two sides of the second spectrum bandwidth have two idle spectrum bandwidths that meet the requirement of the third spectrum bandwidth, where the two idle spectrum bandwidths are not adjacent to a spectrum bandwidth occupied by a channel of another existing service except the second service, randomly select the first idle spectrum bandwidth or the second idle spectrum bandwidth as the allocated resource.

As can be known based on the technical solutions of the foregoing embodiments, an idle spectrum bandwidth between channels of two services having a same path is preferentially selected, then an idle spectrum bandwidth that is not adjacent to a spectrum bandwidth of a channel of another service except an existing service (using the second service as an example) is selected, and if both of the foregoing two types of idle spectrum bandwidths do not exist, an idle spectrum bandwidth between channels of two services having different paths is selected. Therefore, in the technical solution of the embodiment of the present invention, spectrum bandwidths occupied by channels of services having a same path are connected in series as much as possible by using a relatively small spectrum bandwidth that serves as a guard band, which obviously improves a utilization rate of a spectrum bandwidth in an optical communications network, and can further effectively avoid a problem that signal crosstalk is easily generated between channels of services having different paths.

Persons skilled in the art may clearly understand that, for convenience and concision of description, for specific working processes of the foregoing described devices and units, reference may be made to corresponding processes in the foregoing method embodiments, which are not described herein again.

In summary, it can be seen from the technical solutions of the foregoing embodiments that, weights of only a part of links in a network are modified in the technical solutions of the embodiments of the present invention, instead of affecting traffic of all links in the network. However, weights of all links in a network are modified in an existing technical solution, which inevitably affects traffic of all the links. Obviously, in the technical solutions of the embodiments of the present invention, not only a problem that traffic in a part of areas of a network is excessively large can be rapidly and effectively solved, but also services transmitted in the network are affected as little as possible, thereby avoiding a case in which all services transmitted in a network are affected by modifying weights of all links in the network in the existing technical solution.

Communication connection involved in the foregoing embodiments may be communication connection through some interfaces, apparatuses, or unit, and may be electrical connection, mechanical connection or other forms of connection. It should be further noted that, similar expressions such as "first", "second", "third", "fourth", "fifth", "sixth" and "seventh" in the foregoing embodiments aim to describe the technical solutions of the embodiments more clearly, but do not impose any limitation to the present invention.

Persons skilled in the art may be aware that, in combination with the examples described in the embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraint conditions of the technical solutions. Persons skilled in the art may use different methods to implement the described functions for each particular application, but it should not be considered that the implementation goes beyond the scope of the present invention.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, as long as such modifications or replacements do not cause the essence of corresponding technical solutions to depart from the principle and scope of the technical solutions of the embodiments of the present invention.

## Claims

1. A spectrum bandwidth allocation method, comprising:
acquiring a request message for adding a first service, and determining a path of the first service, wherein the request message carries information about a first spectrum bandwidth that needs to be occupied by a channel of the first service;
if a path of a second service in existing services is the same as the path of the first service, determining an idle spectrum bandwidth adjacent to a second spectrum bandwidth occupied by a channel of the second service as an allocated resource, wherein the idle spectrum bandwidth adjacent to the second spectrum bandwidth meets a requirement of a third spectrum bandwidth required for adding the first service, and the third spectrum bandwidth comprises: the first spectrum bandwidth, and a fourth spectrum bandwidth that needs to be occupied by a guard band between channels of the first service and the second service that have the same path, wherein the fourth spectrum bandwidth is less than a spectrum bandwidth occupied by a guard band between channels of two services having different paths; and
allocating, from the idle spectrum bandwidth adjacent to the second spectrum bandwidth, the third spectrum bandwidth to the first service.

2. The spectrum bandwidth allocation method according to claim 1, comprising:
if a path of each service in the existing services is different from the path of the first service, determining an idle spectrum bandwidth adjacent to a fifth spectrum bandwidth occupied by a channel of a third service in the existing services as an allocated resource, wherein the idle spectrum bandwidth adjacent to the fifth spectrum bandwidth meets a requirement of a sixth spectrum bandwidth required for adding the first service, and the sixth spectrum bandwidth comprises: the first spectrum bandwidth, and a seventh spectrum bandwidth that needs to be occupied by a guard band between channels of the first service and the third service that have different paths, wherein the seventh spectrum bandwidth is greater than the fourth spectrum bandwidth; and
allocating, from the idle spectrum bandwidth adjacent to the fifth spectrum bandwidth, the sixth spectrum bandwidth to the first service.

3. The spectrum bandwidth allocation method according to claim 1 or 2, wherein the determining an idle spectrum bandwidth adjacent to a second spectrum bandwidth occupied by a channel of the second service as an allocated resource comprises:
if adjacent parts on two sides of the second spectrum bandwidth have an idle spectrum bandwidth that meets the requirement of the third spectrum bandwidth, wherein a first idle spectrum bandwidth is adjacent to a spectrum bandwidth occupied by a channel of a fourth service in the existing services, a second idle spectrum bandwidth is adjacent to a spectrum bandwidth occupied by a channel of a fifth service in the existing services, the spectrum bandwidth occupied by the channel of the fourth service is closest to the second spectrum bandwidth, and both a path of the fourth service and a path of the fifth service are the same as the path of the second service, selecting the first idle spectrum bandwidth as the allocated resource.

4. The spectrum bandwidth allocation method according to claim 1 or 2, wherein the determining an idle spectrum bandwidth adjacent to a second spectrum bandwidth occupied by a channel of the second service as an allocated resource comprises:
if adjacent parts on two sides of the second spectrum bandwidth have an idle spectrum bandwidth that meets the requirement of the third spectrum bandwidth, wherein a first idle spectrum bandwidth is adjacent to a spectrum bandwidth occupied by a channel of a fourth service in the existing services, a second idle spectrum bandwidth is adjacent to a spectrum bandwidth occupied by a channel of a fifth service in the existing services, a path of the fourth service is the same as the path of the second service, and a path of the fifth service is different from the path of the second service, selecting the first idle spectrum bandwidth as the allocated resource.

5. The spectrum bandwidth allocation method according to claim 1 or 2, wherein the determining an idle spectrum bandwidth adjacent to a second spectrum bandwidth occupied by a channel of the second service as an allocated resource comprises:
if adjacent parts on two sides of the second spectrum bandwidth have an idle spectrum bandwidth that meets the requirement of the third spectrum bandwidth, wherein a first idle spectrum bandwidth is adjacent to a spectrum bandwidth occupied by a channel of a fourth service in the existing services, a path of the fourth service is the same as the path of the second service, and a second idle spectrum bandwidth is not adjacent to a spectrum bandwidth occupied by a channel of another existing service except the second service, selecting the first idle spectrum bandwidth as the allocated resource.

6. The spectrum bandwidth allocation method according to claim 1 or 2, wherein the determining an idle spectrum bandwidth adjacent to a second spectrum bandwidth occupied by a channel of the second service as an allocated resource comprises:
if adjacent parts on two sides of the second spectrum bandwidth have an idle spectrum bandwidth that meets the requirement of the third spectrum bandwidth, wherein a first idle spectrum bandwidth is adjacent to a spectrum bandwidth occupied by a channel of a fourth service in the existing services, a path of the fourth service is different from the path of the second service, and a second idle spectrum bandwidth is not adjacent to a spectrum bandwidth occupied by a channel of another existing service except the second service, selecting the second idle spectrum bandwidth as the allocated resource.

7. The spectrum bandwidth allocation method according to any one of claims 1 to 6, comprising: after the third spectrum bandwidth is allocated to the first service, determining to transmit the first service by using a coherent receiver on a fiber link.

8. A computer program product, comprising computer program code, wherein when a computer unit executes the computer program code, the computer unit executes an action according to any one of claims 1 to 7.

9. A device, comprising: a message acquiring unit, a path determining unit, a first bandwidth selecting unit and a first bandwidth allocating unit, wherein
the message acquiring unit is configured to acquire a request message for adding a first service, and determine a path of the first service, wherein the request message carries information about a first spectrum bandwidth that needs to be occupied by a channel of the first service;
the path determining unit is configured to receive a determining result output by the message acquiring unit, and determine whether a path of each service in existing services is the same as the path of the first service;
the first bandwidth selecting unit is configured to receive a determining result that is output by the path determining unit and indicates that a path of a second service in the existing services is the same as the path of the first service, and determine an idle spectrum bandwidth adjacent to a second spectrum bandwidth occupied by a channel of the second service as an allocated resource, wherein the idle spectrum bandwidth adjacent to the second spectrum bandwidth meets a requirement of a third spectrum bandwidth required for adding the first service, and the third spectrum bandwidth comprises: the first spectrum bandwidth, and a fourth spectrum bandwidth that needs to be occupied by a guard band between channels of the first service and the second service that have the same path, wherein the fourth spectrum bandwidth is less than a spectrum bandwidth occupied by a guard band between channels of two services having different paths; and
the first bandwidth allocating unit is configured to receive a determining result output by the first bandwidth selecting unit, and allocate, from the idle spectrum bandwidth adjacent to the second spectrum bandwidth, the third spectrum bandwidth to the first service.

10. The device according to claim 9, wherein the device further comprises:
a second bandwidth selecting unit, configured to receive a determining result that is output by the path determining unit and indicates that the path of each service in the existing services is different from the path of the first service, and determine an idle spectrum bandwidth adjacent to a fifth spectrum bandwidth occupied by a channel of a third service in the existing services as an allocated resource, wherein the idle spectrum bandwidth adjacent to the fifth spectrum bandwidth meets a requirement of a sixth spectrum bandwidth required for adding the first service, and the sixth spectrum bandwidth comprises: the first spectrum bandwidth, and a seventh spectrum bandwidth that needs to be occupied by a guard band between channels of the first service and the third service that have different paths, wherein the seventh spectrum bandwidth is greater than the fourth spectrum bandwidth; and
a second bandwidth allocating unit, configured to allocate, from the idle spectrum bandwidth adjacent to the fifth spectrum bandwidth, the sixth spectrum bandwidth to the first service.

11. The device according to claim 9 or 10, wherein the first bandwidth selecting unit comprises:
a receiving subunit, configured to receive a determining result that is output by the path determining unit and indicates that the path of the second service in the existing services is the same as the path of the first service; and
a determining subunit, configured to determine the idle spectrum bandwidth adjacent to the second spectrum bandwidth occupied by the channel of the second service as an allocated resource.

12. The device according to claim 11, wherein the determining subunit comprises:
a first subunit, configured to determine that adjacent parts on two sides of the second spectrum bandwidth have an idle spectrum bandwidth that meets the requirement of the third spectrum bandwidth, wherein a first idle spectrum bandwidth is adjacent to a spectrum bandwidth occupied by a channel of a fourth service in the existing services, a second idle spectrum bandwidth is adjacent to a spectrum bandwidth occupied by a channel of a fifth service in the existing services, the spectrum bandwidth occupied by the channel of the fourth service is closest to the second spectrum bandwidth, and both a path of the fourth service and a path of the fifth service are the same as the path of the second service, and select the first idle spectrum bandwidth as the allocated resource.

13. The device according to claim 11, wherein the determining subunit comprises:
a second subunit, configured to determine that adjacent parts on two sides of the second spectrum bandwidth have an idle spectrum bandwidth that meets the requirement of the third spectrum bandwidth, wherein a first idle spectrum bandwidth is adjacent to a spectrum bandwidth occupied by a channel of a fourth service in the existing services, a second idle spectrum bandwidth is adjacent to a spectrum bandwidth occupied by a channel of a fifth service in the existing services, a path of the fourth service is the same as the path of the second service, and a path of the fifth service is different from the path of the second service, and select the first idle spectrum bandwidth as the allocated resource.

14. The device according to claim 11, wherein the determining subunit comprises:
a third subunit, configured to determine that adjacent parts on two sides of the second spectrum bandwidth have an idle spectrum bandwidth that meets the requirement of the third spectrum bandwidth, wherein a first idle spectrum bandwidth is adjacent to a spectrum bandwidth occupied by a channel of a fourth service in the existing services, a path of the fourth service is the same as the path of the second service, and a second idle spectrum bandwidth is not adjacent to a spectrum bandwidth occupied by a channel of another existing service except the second service, and select the first idle spectrum bandwidth as the allocated resource.

15. The device according to claim 11, wherein the determining subunit comprises:
a fourth subunit, configured to determine that adjacent parts on two sides of the second spectrum bandwidth have an idle spectrum bandwidth that meets the requirement of the third spectrum bandwidth, wherein a first idle spectrum bandwidth is adjacent to a spectrum bandwidth occupied by a channel of a fourth service in the existing services, a path of the fourth service is different from the path of the second service, and a second idle spectrum bandwidth is not adjacent to a spectrum bandwidth occupied by a channel of another existing service except the second service, and select the second idle spectrum bandwidth as the allocated resource.

## Patentansprüche

1. Spektrumbandbreiten-Zuweisungsverfahren, Folgendes umfassend:
Erfassen einer Anfragenachricht zum Hinzufügen eines ersten Dienstes und Bestimmen eines Weges des ersten Dienstes, wobei die Anfragenachricht Informationen über eine erste Spektrumbandbreite mitführt, die von einem Kanal des ersten Dienstes besetzt werden muss,
Bestimmen einer freien Spektrumbandbreite angrenzend an eine zweite Spektrumbandbreite, die von einem Kanal eines zweiten Dienstes besetzt ist, als eine zugewiesene Ressource, wenn ein Weg des zweiten Dienstes in bestehenden Diensten der gleiche wie der Weg des ersten Dienstes ist, wobei die freie, an die zweite Spektrumbandbreite angrenzende Spektrumbandbreite eine Anforderung einer dritten Spektrumbandbreite erfüllt, die für das Hinzufügen des ersten Dienstes erforderlich ist, und die dritte Spektrumbandbreite Folgendes umfasst: die erste Spektrumbandbreite und eine vierte Spektrumbandbreite, die durch ein Sicherheitsband zwischen Kanälen des ersten Dienstes und des zweiten Dienstes, die den gleichen Weg aufweisen, besetzt sein muss, wobei die vierte Spektrumbandbreite geringer ist als eine Spektrumbandbreite, die durch ein Sicherheitsband zwischen Kanälen zweier Dienste mit verschiedenen Wegen besetzt ist, und
Zuweisen der dritten Spektrumbandbreite zum ersten Dienst von der an die zweite Spektrumbandbreite angrenzenden freien Spektrumbandbreite.

2. Spektrumbandbreiten-Zuweisungsverfahren nach Anspruch 1, Folgendes umfassend:
Bestimmen einer freien Spektrumbandbreite angrenzend an eine fünfte Spektrumbandbreite, die von einem Kanal eines dritten Dienstens bestehender Dienste besetzt ist, als eine zugewiesene Ressource, wenn ein Weg jedes Dienstes der bestehenden Dienste sich von dem Weg des ersten Dienstes unterscheidet, wobei die an die fünfte Spektrumbandbreite angrenzende freie Spektrumbandbreite eine Anforderung einer sechsten Spektrumbandbreite erfüllt, was für das Hinzufügen des ersten Dienstes notwendig ist, und die sechste Spektrumbandbreite Folgendes umfasst:
die erste Spektrumbandbreite und eine siebente Spektrumbandbreite, die von einem Sicherheitsband zwischen Kanälen des ersten Dienstes und des dritten Dienstes, die verschiedene Wege aufweisen, besetzt sein muss, wobei die siebente Spektrumbandbreite größer als die vierte Spektrumbandbreite ist, und
Zuweisen der sechsten Spektrumbandbreite zum ersten Dienst von der an die fünfte Spektrumbandbreite angrenzenden freien Spektrumbandbreite.

3. Spektrumbandbreiten-Zuweisungsverfahren nach Anspruch 1 oder 2, wobei das Bestimmen einer freien Spektrumbandbreite angrenzend an eine zweite Spektrumbandbreite, die von einem Kanal des zweiten Dienstes besetzt ist, als eine zugewiesene Ressource Folgendes umfasst:
Auswählen der ersten freien Spektrumbandbreite als zugewiesene Ressource, wenn angrenzende Teile an zwei Seiten der zweiten Spektrumbandbreite eine freie Spektrumbandbreite aufweisen, welche die Anforderung der dritten Spektrumbandbreite erfüllt, wobei eine erste freie Spektrumbandbreite an eine Spektrumbandbreite angrenzt, die von einem Kanal eines vierten Dienstes der bestehenden Dienste besetzt ist, eine zweite freie Spektrumbandbreite an eine Spektrumbandbreite angrenzt, die von einem Kanal eines fünften Dienstes der bestehenden Dienste besetzt ist, die Spektrumbandbreite, die vom Kanal des vierten Dienstes besetzt ist, der zweiten Spektrumbandbreite am nächsten liegt und sowohl ein Weg des vierten Dienstes als auch ein Weg des fünften Dienstes die gleichen sind wie der Weg des zweiten Dienstes.

4. Spektrumbandbreiten-Zuweisungsverfahren nach Anspruch 1 oder 2, wobei das Bestimmen einer freien Spektrumbandbreite angrenzend an eine zweite Spektrumbandbreite, die von einem Kanal des zweiten Dienstes besetzt ist, als eine zugewiesene Ressource Folgendes umfasst:
Auswählen der ersten freien Spektrumbandbreite als zugewiesene Ressource, wenn angrenzende Teile an zwei Seiten der zweiten Spektrumbandbreite eine freie Spektrumbandbreite aufweisen, welche die Anforderung der dritten Spektrumbandbreite erfüllt, wobei eine erste freie Spektrumbandbreite an eine Spektrumbandbreite angrenzt, die von einem Kanal eines vierten Dienstes der bestehenden Dienste besetzt ist, eine zweite freie Spektrumbandbreite an eine Spektrumbandbreite angrenzt, die von einem Kanal eines fünften Dienstes der bestehenden Dienste besetzt ist, ein Weg des vierten Dienstes der gleiche wie der Weg des zweiten Dienstes ist und ein Weg des fünften Dienstes sich von dem Weg des zweiten Dienstes unterscheidet.

5. Spektrumbandbreiten-Zuweisungsverfahren nach Anspruch 1 oder 2, wobei das Bestimmen einer freien Spektrumbandbreite angrenzend an eine zweite Spektrumbandbreite, die von einem Kanal des zweiten Dienstes besetzt ist, als eine zugewiesene Ressource Folgendes umfasst:
Auswählen der ersten freien Spektrumbandbreite als zugewiesene Ressource, wenn angrenzende Teile an zwei Seiten der zweiten Spektrumbandbreite eine freie Spektrumbandbreite aufweisen, welche die Anforderung der dritten Spektrumbandbreite erfüllt, wobei eine erste freie Spektrumbandbreite an eine Spektrumbandbreite angrenzt, die von einem Kanal eines vierten Dienstes der bestehenden Dienste besetzt ist, ein Weg des vierten Dienstes der gleiche wie der Weg des zweiten Dienstes ist und eine zweite freie Spektrumbandbreite nicht an eine Spektrumbandbreite angrenzt, die, bis auf den zweiten Dienst, von einem Kanal eines anderen bestehenden Dienstes besetzt ist.

6. Spektrumbandbreiten-Zuweisungsverfahren nach Anspruch 1 oder 2, wobei das Bestimmen einer freien Spektrumbandbreite angrenzend an eine zweite Spektrumbandbreite, die von einem Kanal des zweiten Dienstes besetzt ist, als eine zugewiesene Ressource Folgendes umfasst:
Auswählen der zweiten freien Spektrumbandbreite als zugewiesene Ressource, wenn angrenzende Teile an zwei Seiten der zweiten Spektrumbandbreite eine freie Spektrumbandbreite aufweisen, welche die Anforderung der dritten Spektrumbandbreite erfüllt, wobei eine erste freie Spektrumbandbreite an eine Spektrumbandbreite angrenzt, die von einem Kanal eines vierten Dienstes der bestehenden Dienste besetzt ist, ein Weg des vierten Dienstes sich von dem Weg des zweiten Dienstes unterscheidet und eine zweite freie Spektrumbandbreite nicht an eine Spektrumbandbreite angrenzt, die, bis auf den zweiten Dienst, von einem Kanal eines anderen bestehenden Dienstes besetzt ist.

7. Spektrumbandbreiten-Zuweisungsverfahren nach einem der Ansprüche 1 bis 6, Folgendes umfassend: Bestimmen des Übertragens des ersten Dienstes mit Hilfe eines kohärenten Empfängers an einer Faserverbindung, nachdem die dritte Spektrumbandbreite dem ersten Dienst zugewiesen wurde.

8. Computerprogrammprodukt, einen Computerprogrammcode umfassend, wobei, wenn eine Computereinheit den Computerprogrammcode ausführt, die Computereinheit einen Vorgang nach einem der Ansprüche 1 bis 7 ausführt.

9. Vorrichtung, Folgendes umfassend: eine Nachrichtenerfassungseinheit, eine Wegebestimmungseinheit, eine erste Bandbreitenauswahleinheit und eine erste Bandbreitenzuweisungseinheit, wobei:
die Nachrichtenerfassungseinheit dafür konfiguriert ist, eine Anfragenachricht zum Hinzufügen eines Dienstes zu erfassen und einen Weg des ersten Dienstes zu bestimmen, wobei die Anfragenachricht Informationen über eine erste Spektrumbandbreite mitführt, die von einem Kanal des ersten Dienstes besetzt werden muss,
die Wegebestimmungseinheit dafür konfiguriert ist, ein Bestimmungsergebnis zu empfangen, das von der Nachrichtenerfassungseinheit ausgegeben wird, und zu bestimmen, ob ein Weg jedes Dienstes bestehender Dienste der gleiche wie der Weg des ersten Dienstes ist,
die erste Bandbreitenauswahleinheit dafür konfiguriert ist, ein Bestimmungsergebnis zu empfangen, das von der Wegebestimmungseinheit ausgegeben wird und anzeigt, dass ein Weg eines zweiten Dienstes der bestehenden Dienste der gleiche wie der Weg des ersten Dienstes ist, und eine freie Spektrumbandbreite angrenzend an eine zweite Spektrumbandbreite, die von einem Kanal des zweiten Dienstes besetzt ist, als eine zugewiesene Ressource zu bestimmen, wobei die an die zweite Spektrumbandbreite angrenzende freie Spektrumbandbreite eine Anforderung einer dritten Spektrumbandbreite erfüllt, was für das Hinzufügen des ersten Dienstes notwendig ist, und wobei die dritte Spektrumbandbreite Folgendes umfasst: die erste Spektrumbandbreite und eine vierte Spektrumbandbreite, die durch ein Sicherheitsband zwischen Kanälen des ersten Dienstes und des zweiten Dienstes, die den gleichen Weg aufweisen, besetzt sein muss, wobei die vierte Spektrumbandbreite geringer ist als eine Spektrumbandbreite, die durch ein Sicherheitsband zwischen Kanälen zweier Dienste mit verschiedenen Wegen besetzt ist, und
die erste Bandbreitenzuweisungseinheit dafür konfiguriert ist, ein Bestimmungsergebnis zu empfangen, das von der ersten Bandbreitenauswahleinheit ausgegeben wird und von der an die zweite Spektrumbandbreite angrenzenden freien Spektrumbandbreite die dritte Spektrumbandbreite zum ersten Dienst zuzuweisen.

10. Vorrichtung nach Anspruch 9, wobei die Vorrichtung ferner Folgendes umfasst:
eine zweite Bandbreitenauswahleinheit, die dafür konfiguriert ist, ein Bestimmungsergebnis zu empfangen, das von der Wegebestimmungseinheit ausgegeben wird und anzeigt, dass der Weg jedes Dienstes der bestehenden Dienste sich von dem Weg des ersten Dienstes unterscheidet, und eine freie Spektrumbandbreite angrenzend an eine fünfte Spektrumbandbreite, die von einem Kanal eines dritten Dienstes der bestehenden Dienste besetzt ist, als eine zugewiesene Ressource zu bestimmen, wobei die an die fünfte Spektrumbandbreite angrenzende freie Spektrumbandbreite eine Anforderung einer sechsten Spektrumbandbreite erfüllt, was für das Hinzufügen des ersten Dienstes notwendig ist, und wobei die sechste Spektrumbandbreite Folgendes umfasst: die erste Spektrumbandbreite und eine siebente Spektrumbandbreite, die durch ein Sicherheitsband zwischen Kanälen des ersten Dienstes und des dritten Dienstes, die verschiedene Wege aufweisen, besetzt sein muss, wobei die siebente Spektrumbandbreite größer ist als die vierte Spektrumbandbreite, und
eine zweite Bandbreitenzuweisungseinheit, die dafür konfiguriert ist, von der an die fünfte Spektrumbandbreite angrenzenden freien Spektrumbandbreite die sechste Spektrumbandbreite dem ersten Dienst zuzuweisen.

11. Vorrichtung nach Anspruch 9 oder 10, wobei die erste Bandbreitenauswahleinheit Folgendes umfasst:
eine Empfangsuntereinheit, die dafür konfiguriert ist, ein Bestimmungsergebnis zu empfangen, das von der Wegebestimmungseinheit ausgegeben wird und anzeigt, dass der Weg des zweiten Dienstes der bestehenden Dienste der gleiche wie der Weg des ersten Dienstes ist, und
eine Bestimmungsuntereinheit, die dafür konfiguriert ist, die an die zweite Spektrumbandbreite angrenzende freie Spektrumbandbreite, die durch den Kanal des zweiten Dienstes besetzt ist, als eine zugewiesene Ressource zu bestimmen.

12. Vorrichtung nach Anspruch 11, wobei die Bestimmungsuntereinheit Folgendes umfasst:
eine erste Untereinheit, die dafür konfiguriert ist zu bestimmen, dass angrenzende Teile an zwei Seiten der zweiten Spektrumbandbreite eine freie Spektrumbandbreite aufweisen, welche die Anforderung der dritten Spektrumbandbreite erfüllt, wobei eine erste freie Spektrumbandbreite an eine Spektrumbandbreite angrenzt, die von einem Kanal eines vierten Dienstes der bestehenden Dienste besetzt ist, eine zweite freie Spektrumbandbreite an eine Spektrumbandbreite angrenzt, die von einem Kanal eines fünften Dienstes der bestehenden Dienste besetzt ist, die Spektrumbandbreite, die vom Kanal des vierten Diensts besetzt ist, der zweiten Spektrumbandbreite am nächsten liegt und sowohl ein Weg des vierten Dienstes als auch ein Weg des fünften Dienstes der gleiche wie der Weg des zweiten Dienstes sind, und die erste Spektrumbandbreite als zugewiesene Ressource auszuwählen.

13. Vorrichtung nach Anspruch 11, wobei die Bestimmungsuntereinheit Folgendes umfasst:
eine zweite Untereinheit, die dafür konfiguriert ist zu bestimmen, dass angrenzende Teile an zwei Seiten der zweiten Spektrumbandbreite eine freie Spektrumbandbreite aufweisen, welche die Anforderung der dritten Spektrumbandbreite erfüllt, wobei eine erste freie Spektrumbandbreite an eine Spektrumbandbreite angrenzt, die von einem Kanal eines vierten Dienstes der bestehenden Dienste besetzt ist, eine zweite freie Spektrumbandbreite an eine Spektrumbandbreite angrenzt, die von einem Kanal eines fünften Dienstes der bestehenden Dienste besetzt ist, ein Weg des vierten Dienstes der gleiche wie der Weg des zweiten Dienstes ist und ein Weg des fünften Dienstes sich von dem Weg des zweiten Dienstes unterscheidet, und die erste freie Spektrumbandbreite als zugewiesene Ressource auszuwählen.

14. Vorrichtung nach Anspruch 11, wobei die Bestimmungsuntereinheit Folgendes umfasst:
eine dritte Untereinheit, die dafür konfiguriert ist zu bestimmen, dass angrenzende Teile an zwei Seiten der zweiten Spektrumbandbreite eine freie Spektrumbandbreite aufweisen, welche die Anforderung der dritten Spektrumbandbreite erfüllt, wobei eine erste freie Spektrumbandbreite an eine Spektrumbandbreite angrenzt, die von einem Kanal eines vierten Dienstes der bestehenden Dienste besetzt ist, ein Weg des vierten Dienstes der gleiche wie der Weg des zweiten Dienstes ist und eine zweite freie Spektrumbandbreite nicht an eine Spektrumbandbreite angrenzt, die, bis auf den zweiten Dienst, von einem Kanal eines anderen bestehenden Dienstes besetzt ist, und die erste freie Spektrumbandbreite als zugewiesene Ressource auszuwählen.

15. Vorrichtung nach Anspruch 11, wobei die Bestimmungsuntereinheit Folgendes umfasst:
eine vierte Untereinheit, die dafür konfiguriert ist zu bestimmen, dass angrenzende Teile an zwei Seiten der zweiten Spektrumbandbreite eine freie Spektrumbandbreite aufweisen, welche die Anforderung der dritten Spektrumbandbreite erfüllt, wobei eine erste freie Spektrumbandbreite an eine Spektrumbandbreite angrenzt, die von einem Kanal eines vierten Dienstes der bestehenden Dienste besetzt ist, ein Weg des vierten Dienstes sich von dem Weg des zweiten Dienstes unterscheidet und eine zweite freie Spektrumbandbreite nicht an eine Spektrumbandbreite angrenzt, die, bis auf den zweiten Dienst, von einem Kanal eines anderen bestehenden Dienstes besetzt ist, und die zweite freie Spektrumbandbreite als zugewiesene Ressource auszuwählen.

## Revendications

1. Procédé d'attribution de largeur de bande de spectre consistant à :
- acquérir un message de demande pour ajouter un premier service, et déterminer un trajet du premier service, dans lequel le message de demande comprend des informations concernant une première largeur de bande de spectre devant être occupée par un canal du premier service ;
- si le trajet d'un deuxième service dans des services existant est identique au trajet du premier service, déterminer une largeur de bande de spectre dormante adjacente à une deuxième largeur de bande de spectre occupée par un canal du deuxième service comme étant une ressource attribuée, dans lequel la largeur de bande de spectre dormante adjacente à la deuxième largeur de bande de spectre répond à une exigence d'une troisième largeur de bande de spectre nécessaire pour ajouter le premier service, et la troisième largeur de bande de spectre comprend : la première largeur de bande de spectre et une quatrième largeur de bande de spectre qui doit être occupée par une bande de garde entre les canaux du premier service et du deuxième service ayant le même trajet, dans lequel la quatrième largeur de bande de spectre est inférieure à une largeur de bande de spectre occupée par une bande de garde entre les canaux de deux services ayant des trajets différents ; et
- attribuer, à partir de la largeur de bande de spectre dormante adjacente à la deuxième largeur de bande de spectre, la troisième largeur de bande de spectre au premier service.

2. Procédé d'attribution de largeur de bande de spectre selon la revendication 1, consistant à :
- si un trajet de chaque service dans les services existants est différent du trajet d'un premier service, déterminer une largeur de bande de spectre dormante adjacente à une cinquième largeur de bande de spectre occupée par un canal du troisième service dans les services existants comme étant une ressource attribuée, dans lequel la largeur de bande de spectre dormante adjacente à une cinquième largeur de bande de spectre répond à une exigence d'une sixième largeur de bande de spectre nécessaire pour ajouter le premier service, et la sixième largeur de bande de spectre comprend : la première largeur de bande de spectre et une septième largeur de bande de spectre qui doit être occupée par une bande de garde entre les canaux du premier service et du troisième service ayant des trajets différents, dans lequel la septième largeur de bande de spectre est supérieure à la quatrième largeur de bande de spectre ; et
- attribuer, à partir de la largeur de bande de spectre dormante adjacente à la cinquième largeur de bande de spectre, la sixième largeur de bande de spectre au premier service.

3. Procédé d'attribution de largeur de bande de spectre selon la revendication 1 ou 2, dans lequel la détermination d'une largeur de bande de spectre dormante adjacente à une deuxième largeur de bande de spectre occupée par un canal du deuxième service comme étant une ressource attribuée consiste à :
- si des parties adjacentes sur deux côtés de la deuxième largeur de bande de spectre ont une largeur de bande de spectre dormante répondant à l'exigence de la troisième largeur de bande de spectre, une première largeur de bande de spectre dormante étant adjacente à une largeur de bande de spectre occupée par un canal d'un quatrième service dans les services existants, une deuxième largeur de bande de spectre dormante étant adjacente à une largeur de bande de spectre occupée par un canal d'un cinquième service dans les services existants, la largeur de bande de spectre occupée par le canal du quatrième service étant plus proche de la deuxième largeur de bande de spectre, et un trajet du quatrième service et un trajet du cinquième service étant identiques au trajet du deuxième service, choisir la première largeur de bande dormante comme étant la ressource attribuée.

4. Procédé d'attribution de largeur de bande de spectre selon la revendication 1 ou 2, dans lequel la détermination d'une largeur de bande de spectre dormante adjacente à une deuxième largeur de bande de spectre occupée par un canal du deuxième service comme étant une ressource attribuée consiste à :
- si des parties adjacentes sur deux côtés de la deuxième largeur de bande de spectre ont une largeur de bande de spectre dormante répondant aux exigences de la troisième largeur de bande de spectre, une première largeur de bande de spectre dormante étant adjacente à une largeur de bande de spectre occupée par un canal d'un quatrième service dans les services existants, une deuxième largeur de bande de spectre dormante étant adjacente à une largeur de bande de spectre occupée par un canal d'un cinquième service dans les services existants, un trajet du quatrième service étant identique au trajet du deuxième service et un trajet du cinquième service étant différent du trajet du deuxième service, choisir la première largeur de bande dormante comme étant la ressource attribuée.

5. Procédé d'attribution de largeur de bande de spectre selon la revendication 1 ou 2, dans lequel la détermination d'une largeur de bande de spectre dormante adjacente à une deuxième largeur de bande de spectre occupée par un canal du deuxième service comme étant une ressource attribuée consiste à :
- si des parties adjacentes sur deux côtés de la deuxième largeur de bande de spectre ont une largeur de bande de spectre dormante répondant à l'exigence de la troisième largeur de bande de spectre, une première largeur de bande de spectre dormante étant adjacente à une largeur de bande de spectre occupée par un canal d'un quatrième service dans les services existants, un trajet du quatrième service étant identique au trajet du deuxième service, et une deuxième largeur de bande de spectre dormante n'étant pas adjacente à la largeur de bande de spectre occupée par un canal d'un autre service existant à l'exception du deuxième service, choisir la première largeur de bande dormante comme étant la ressource attribuée.

6. Procédé d'attribution de largeur de bande de spectre selon la revendication 1 ou 2, dans lequel la détermination d'une largeur de bande de spectre dormante adjacente à une deuxième largeur de bande de spectre occupée par un canal du deuxième service comme étant une ressource attribuée consiste à :
- si des parties adjacentes sur deux côtés de la deuxième largeur de bande de spectre ont une largeur de bande de spectre dormante répondant à l'exigence de la troisième largeur de bande de spectre, une première largeur de bande de spectre dormante étant adjacente à une largeur de bande de spectre occupée par un canal d'un quatrième service dans les services existants, un trajet du quatrième service étant différent du trajet du deuxième service, et une deuxième largeur de bande de spectre dormante n'étant pas adjacente à la largeur de bande de spectre occupée par un canal d'un autre service existant à l'exception du deuxième service, choisir la deuxième largeur de bande dormante comme étant la ressource attribuée.

7. Procédé d'attribution de largeur de bande de spectre selon l'une quelconque des revendications 1 à 6, consistant à : après que la troisième largeur de bande de spectre a été attribuée au premier service, décider de transmettre le premier service en utilisant un récepteur cohérent sur une liaison par fibre.

8. Produit de type programme informatique comprenant un code de programme informatique, dans lequel lorsqu'une unité informatique exécute le code de programme informatique, l'unité informatique exécute une action selon l'une quelconque des revendications 1 à 7.

9. Dispositif comprenant : une unité d'acquisition de message, une unité de détermination de trajet, une première unité de sélection de largeur de bande et une première unité d'attribution de largeur de bande, dans lequel :
- l'unité d'acquisition de message est conçue pour acquérir un message de demande pour ajouter un premier service, et déterminer un trajet du premier service, dans lequel le message de demande comprend des informations concernant une premier largeur de bande de spectre devant être occupée par un canal du premier service ;
- l'unité de détermination de trajet est conçue pour recevoir un résultat de détermination émis par l'unité d'acquisition de message et déterminer si un trajet de chaque service dans les services existants est identique au trajet du premier service ;
- la première unité de sélection de largeur de bande est conçue pour recevoir un résultat de détermination émis par l'unité de détermination de trajet et indiquer qu'un trajet d'un deuxième service dans les services existants est identique au trajet du premier service, et déterminer une largeur de bande de spectre dormante adjacente à une deuxième largeur de bande de spectre occupée par un canal du deuxième service comme étant une ressource attribuée, dans lequel la largeur de bande de spectre dormante adjacente à la deuxième largeur de bande de spectre répond à une exigence d'une troisième largeur de bande de spectre nécessaire pour ajouter le premier service, et la troisième largeur de bande de spectre comprend : la première largeur de bande de spectre et une quatrième largeur de bande de spectre qui doit être occupée par une bande de garde entre les canaux du premier service et du deuxième service ayant le même trajet, dans lequel la quatrième largeur de bande de spectre est inférieure à une largeur de bande de spectre occupée par une bande de garde entre les canaux de deux services ayant des trajets différents ; et
- la première unité d'attribution de largeur de bande est conçue pour recevoir un résultat de détermination émis par la première unité de sélection de largeur de bande, et attribuer, à partir de la largeur de bande de spectre dormante adjacente à la deuxième largeur de bande de spectre, la troisième largeur de bande de spectre au premier service.

10. Dispositif selon la revendication 9, lequel comprend en outre :
- une seconde unité de sélection de largeur de bande conçue pour recevoir un résultat de détermination émis par l'unité de détermination de trajet et indiquant que le trajet de chaque service dans les services existants est différent du trajet du premier service, et déterminer une largeur de bande de spectre dormante adjacente à une cinquième largeur de bande de spectre occupée par un canal du troisième service dans les services existants comme étant une ressource attribuée, dans lequel la largeur de bande de spectre dormante adjacente à la cinquième largeur de bande de spectre répond à une exigence d'une sixième largeur de bande de spectre nécessaire pour ajouter le premier service, et la sixième largeur de bande de spectre comprend : la première largeur de bande de spectre et une septième largeur de bande de spectre qui doit être occupée par une bande de garde entre les canaux du premier service et du troisième service ayant des trajets différents, dans lequel la septième largeur de bande de spectre est supérieure à la quatrième largeur de bande de spectre ; et
- une seconde unité d'attribution de largeur de bande conçue pour attribuer, à partir de la largeur de bande de spectre dormante adjacente à la cinquième largeur de bande de spectre, la sixième largeur de bande de spectre au premier service.

11. Dispositif selon la revendication 9 ou 10, dans lequel la première unité de sélection de largeur de bande comprend :
- une sous-unité de réception conçue pour recevoir un résultat de détermination émis par l'unité de détermination de trajet et indiquant que le trajet du deuxième service dans les services existants est identique au trajet du premier service ; et
- une sous-unité de détermination conçue pour déterminer la largeur de bande de spectre dormante adjacente à la deuxième largeur de bande de spectre occupée par le canal du deuxième service comme étant une ressource attribuée.

12. Dispositif selon la revendication 11, dans lequel la sous-unité de détermination comprend :
- une première sous-unité conçue pour déterminer que des parties adjacentes sur deux côtés de la deuxième largeur de bande de spectre ont une largeur de bande de spectre dormante répondant à l'exigence de la troisième largeur de bande de spectre, une première largeur de bande de spectre dormante étant adjacente à une largeur de bande de spectre occupée par un canal d'un quatrième service dans les services existants, une deuxième largeur de bande de spectre dormante étant adjacente à une largeur de bande de spectre occupée par un canal d'un cinquième service dans les services existants, la largeur de bande de spectre occupée par le canal du quatrième service étant plus proche de la deuxième largeur de bande de spectre, et un trajet du quatrième service et un trajet du cinquième service étant identiques au trajet du deuxième service, et choisir la première largeur de bande dormante comme étant la ressource attribuée.

13. Dispositif selon la revendication 11, dans lequel la sous-unité de détermination comprend :
- une deuxième sous-unité conçue pour déterminer que des parties adjacentes sur deux côtés de la deuxième largeur de bande de spectre ont une largeur de bande de spectre dormante répondant à l'exigence de la troisième largeur de bande de spectre, une première largeur de bande de spectre dormante étant adjacente à une largeur de bande de spectre occupée par un canal d'un quatrième service dans les services existants, une deuxième largeur de bande de spectre dormante étant adjacente à une largeur de bande de spectre occupée par un canal d'un cinquième service dans les services existants, un trajet du quatrième service étant identique au trajet du deuxième service et un trajet du cinquième service étant différent du trajet du deuxième service, et choisir la première largeur de bande dormante comme étant la ressource attribuée.

14. Dispositif selon la revendication 11, dans lequel la sous-unité de détermination comprend :
- une troisième sous-unité conçue pour déterminer que des parties adjacentes sur deux côtés de la deuxième largeur de bande de spectre ont une largeur de bande de spectre dormante répondant à l'exigence de la troisième largeur de bande de spectre, une première largeur de bande de spectre dormante étant adjacente à une largeur de bande de spectre occupée par un canal d'un quatrième service dans les services existants, un trajet du quatrième service étant identique au trajet du deuxième service, et une deuxième largeur de bande de spectre dormante n'étant pas adjacente à la largeur de bande de spectre occupée par un canal d'un autre service existant à l'exception du deuxième service, et choisir la première largeur de bande dormante comme étant la ressource attribuée.

15. Dispositif selon la revendication 11, dans lequel la sous-unité de détermination comprend :
- une quatrième sous-unité conçue pour déterminer que des parties adjacentes sur deux côtés de la deuxième largeur de bande de spectre ont une largeur de bande de spectre dormante répondant à l'exigence de la troisième largeur de bande de spectre, une première largeur de bande de spectre dormante étant adjacente à une largeur de bande de spectre occupée par un canal d'un quatrième service dans les services existants, un trajet du quatrième service étant différent du trajet du deuxième service, et une deuxième largeur de bande de spectre dormante n'étant pas adjacente à la largeur de bande de spectre occupée par un canal d'un autre service existant à l'exception du deuxième service, et choisir la deuxième largeur de bande dormante comme étant la ressource attribuée.
